# EUROPEAN PATENT SPECIFICATION

(11) **EP 4 096 810 B1**
(45) Date of publication and mention of the grant of the patent: **28.02.2024**
(21) Application number: 21702396.9
(22) Date of filing: 20.01.2021
(51) Int. Cl.: B01D 53/62, B01D 53/34, B01D 53/96, F28D 20/00

(54) **SYSTEM AND METHOD FOR TRANSPORTABLE ENERGY STORAGE AND CARBON CAPTURE**
SYSTEM UND VERFAHREN ZUR TRANSPORTABLEN ENERGIESPEICHERUNG UND KOHLENSTOFFABSCHEIDUNG
SYSTÈME ET PROCÉDÉ DE STOCKAGE D'ÉNERGIE TRANSPORTABLE ET DE CAPTURE DE CARBONE

(30) Priority: 28.01.2020 SE 2050076
(43) Date of publication of application: 07.12.2022
(73) Proprietor: SaltX Technology AB, 129 44 Hägersten (SE)
(72) Inventor: CROON, Lars, 116 38 Stockholm (SE); BLACKMAN, Corey, 181 55 Lidingö (SE)
(74) Representative: Ström & Gulliksson AB
(86) International application number: PCT/EP2021/051210
(87) International publication number: WO 2021/151758

(56) References cited:
- WO-A1-00/65211
- WO-A1-2015/197885
- WO-A2-2009/144472
- CN-A- 105 854 543
- FR-A1- 2 418 422
- US-A1- 2015 129 208
- US-A1- 2019 331 364
- BENITEZ-GUERRERO MONICA ET AL: "Large-scale high-temperature solar energy storage using natural minerals", SOLAR ENERGY MATERIALS AND SOLAR CELLS, vol. 168, 14 April 2017 (2017-04-14), - 14 April 2017 (2017-04-14), pages 14-21, XP085035874, ISSN: 0927-0248, DOI: 10.1016/J.SOLMAT.2017.04.013

## Description

### Field of the invention

The present invention relates to a system and a method for storage of energy and carbon capture, where a storage compartment is transportable.

### Background

WO 2012/118437 discloses a particle comprising an inner part and an outer coating, said inner part comprises at least one selected from the group consisting of a salt and CaO and said outer coating comprises hydrophobic nanoparticles.

WO 2016/166364 discloses a material for use in a chemical heat pump, the material comprises an active substance, and allows transport of a volatile liquid in gas phase to and from at least a part of the active substance, wherein at least a part of the material is in thermal contact with the surroundings, where the material comprises flakes of at least one selected from the group consisting of graphene and graphene oxide, wherein each individual flake has a lateral size in the range 100-10000 nm and a thickness in the range 0.34 to 5 nm.

EP2762781 discloses using a CaO/CaCO₃ loop for CO₂ capture from flue gases (CCS) by means of fluidized bed technology. Energy storage using CaO/CaCO₃ in conjunction with CO2 capture is described. A solution is provided to uncouple the power output from the operation conditions of an oxyfired circulating fluidized bed calciner to be able to operate with different power outputs.

US 2018/0028967 discloses collection of CO₂ with CaO in combination with a process for cement manufacture. WO2009144472 discloses removal (CaO/CaCO₃) of CO₂ from exhaust gases using fluidised bed reactors. The carbon dioxide acceptor (e.g. CaO) is nanoparticulate and coated with a metal oxide (e.g. SiO₂). It is mentioned that the metal oxides can be nanostructured and that this can stabilize pore structure which is present when the carbon dioxide acceptor is nanoparticulate. But also mention that the problem of agglomeration still is present, in spite of nanostructures.

US20120025134 relates to CCS with CaO/CaCO₃ and in particular to a method of producing a CO₂ adsorbent.
Mentions that the incorporation of CaO into an inert porous metal oxide produces a sorbent with desirable properties. CaO crystals or grains may be about 150 nm in
diameter, while MgO grains that separate them may be about 30 nm in diameter. The mixture is produced by mixing a CaO with at least one metal oxide in a solvent. The
metal oxide may be silicon oxide or others.

US 2014/0044632 discloses a device for collection of CO₂ from exhaust gas from a vehicle, a heating system or in industrial process. The focus of the application is absorption of CO₂. All absorbent is all the time in the absorber cartridge so that the gases are lead through the entire or a large portion of the absorbent. This has the effect that the absorption rate for CO₂ decreases non-linearly, which is a disadvantage for energy storage purposes. The absorbent is lime and specifically soda lime comprising CaOH with a smaller part of NaOH and KOH.

Known systems for carbon capture and energy storage using CaO/CaCO₃ typically comprise a carbonator and a calciner. Problems in the prior art include that the calciner is a complex device which is more complicated than the carbonator and that the calciner is easier to build in large or very large scale. The carbonator on the other hand is scalable for instance because it has fewer components and no filters. The carbonator can be made in any desirable size including very small sizes.

The general concept of having carbonator and calciner positioned and operated remotely and independently from each other is disclosed in FR2418422 A1. CaO is obtained by decomposition of CaCO₃ in a calciner. It is further collected in storage containers and transported, e.g. in trucks, to a carbonator which can be linked to an industrial plant. Carbon dioxide in industrial gases generated by the plant reacts with CaO to form CaCO3.

It is also desirable to minimize the long-term structural changes and agglomeration in CaO/CaCO₃, which may occur during repeated cycles.

### Summary

One objective of the present invention is to obviate at least some of the disadvantages in the prior art and provide an energy storage system as well as a method.

In a first aspect there is provided a system for energy storage and CO₂ capture comprising the features of claim 1.

In a second aspect there is provided a method for storing energy and capturing CO₂ comprising the steps defined in claim 12.

Further embodiments of the present invention are defined in the appended dependent claims, which are explicitly incorporated herein.

It is an advantage that the capacity of the carbonator can be adapted to the need at the location where it is installed. The capacity of the carbonator is easy to adapt form a technical point of view. The calciner which is more difficult to manufacture in small scale can be made large and serve many carbonators.

The release of heat in the carbonator and the corresponding heat consumption in the calciner can be used as an energy storage. The calciner can be operated at hours when the energy cost is lower. The device releasing CO₂ normally operates when there is a need for energy and then the carbonator is active giving an additional boost.

### Brief description of the drawings

Aspects and embodiments will be described with reference to the following drawing in which:

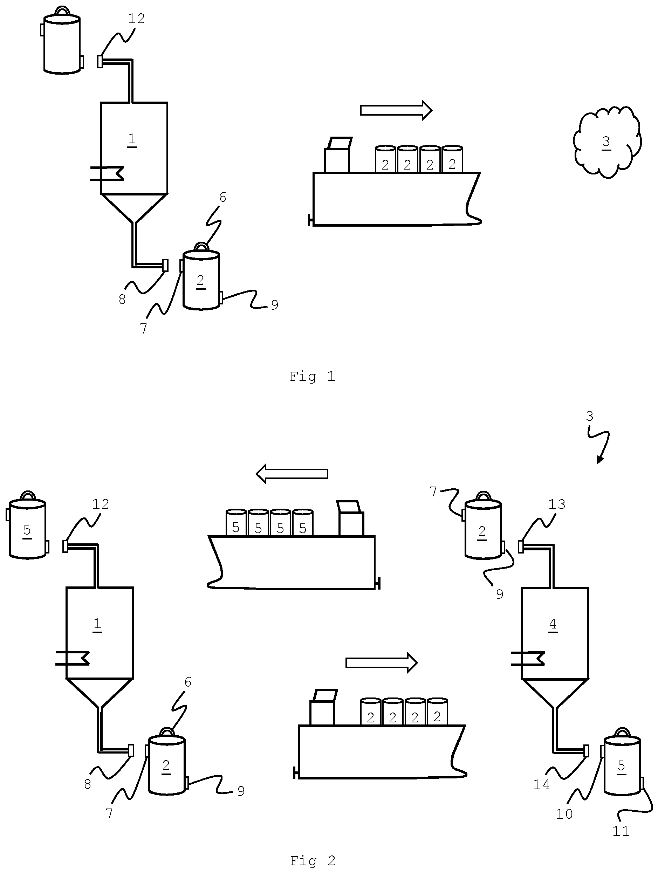

Figure 1 shows a system for energy storage and CO₂ capture comprising CaO, a carbonator (1) adapted to react CaO with CO₂ to produce CaCO₃, at least one CaCO₃ storage container (2) for receiving and storing the CaCO₃ produced in the carbonator (1). The CaCO₃ storage container (2) is configured to be transportable such that the CaCO₃ can be supplied to a geographical location (3) remote from the carbonator (1) for CO₂ release. The CaCO₃ storage container (2) is equipped with CaCO₃ container input means (7) and CaCO₃ container output means (9) as well as lifting means (6). The carbonator (1) is equipped with carbonator CaO input means (12) and carbonator CaCO₃ output means (8). The carbonator (1) is equipped with CO₂ input means.
Figure 2 shows a system for energy storage and CO₂ capture as in figure 1 and further comprising a calciner (4) located at a geographical location (3) remote from the carbonator (1) and adapted to heat the CaCO₃ of the transportable CaCO₃ storage container (2) to a temperature where CO₂ is released to produce CaO and at least one CaO storage container (5) for receiving and storing the CaO produced in the calciner (4). The CaO storage container (5) is equipped with CaO container input means (10) and CaO container output means (11). A loop as lifting means is shown on the CaO storage container (5). The calciner (4) is equipped with calciner CaCO₃ input means (13) and calciner CaO output means (14). The calciner (4) is equipped with CO₂ output means. Transportation of the containers between the carbonator (1) and the calciner (4) is indicated.

### Detailed description

Before the invention is disclosed and described in detail, it is to be understood that this invention is not limited to particular configurations, process steps and materials disclosed herein as such configurations, process steps and materials may vary somewhat. It is also to be understood that the terminology employed herein is used for the purpose of describing particular embodiments only and is not intended to be limiting since the scope of the present invention is limited only by the appended claims.

It must be noted that, as used in this specification and the appended claims, the singular forms "a", "an" and "the" include plural referents unless the context clearly dictates otherwise.

"Energy storage" as used throughout the description and in the claims denote the storage of energy including storage of energy in chemical form and also storage of energy as heat energy, including storage in phase change materials.

"Largest size" of a volume or particle as used throughout the description and in the claims denote the largest distance between any two points on the surface of the volume or particle. Of all possible distances between two arbitrary points on the surface of the particle or volume, the largest possible distance is selected. For a sphere this corresponds to the diameter of the sphere.

"Particle" as used throughout the description and in the claims denote a piece of material in solid form.

"System" as used throughout the description and in the claims denote a combination of several devices.

In a first aspect there is provided a system for energy storage and CO₂ capture comprising:
- CaO,
- a carbonator (1) adapted to react CaO with CO₂ to produce CaCO₃,
- at least one CaCO₃ storage container (2) for receiving and storing the CaCO₃ produced in the carbonator (1),
characterized in that the CaCO₃ storage container (2) is configured to be transportable such that the CaCO₃ can be supplied to a geographical location (3) remote from the carbonator (1) for CO₂ release.

The CaCO₃ storage container (2) is configured to be transportable so that it can be connected to, pulled along by or loaded into some kind of transportation device such as a truck, a cargo train or a boat.

The CaCO₃ is intended to be supplied to a geographical location (3) remote from the carbonator (1) for CO₂ release. A geographical location (3) remote from the carbonator (1) is at another place, examples include but are not limited to at least 1 km away from the carbonator (1), and at least 10 km away from the carbonator (1). Thus in one embodiment the geographical location (3) remote from the carbonator (1) is 1 km or more away from the carbonator (1). A geographical location (3) remote from the carbonator (1) is to be interpreted so that the distance is so that the CaCO₃ storage container (2) should be transportable and so that it is not economically realistic to have another transportation means for the CaCO₃, such as for instance a conveyor belt or a pipe. A remote geographical location is located as such a distance that a transportable storage container suitably is used. As an alternative this distance is at least 1 km, alternatively at least 10 km. The captured CO₂ is released at the geographical location (3).

In the art, it is a problem that calciner are not very scalable and difficult to build in small scale. This is due to their complexity including many components and filters. Calciners are from a technical point of view easier to build in large scale. Carbonators on the other hand are much more scalable compared to calciners. Carbonators can more easily be made in small scale and the size and capacity of the carbonator can then be adapted to the need at the site where CO₂ capture is needed.

Heat is released in the carbonator and the corresponding heat is consumed in the calciner. This is suitably used as an energy storage so that the carbonator gives an additional heat boost during operation. The calciner can be operated at hours when the energy cost is lower. Thereby an energy storing effect is achieved consuming energy when available and releasing heat energy when there is a need. The device releasing CO₂ normally operates when there is a need for energy and then the carbonator is active giving an additional boost.

The CO₂ which is captured can come from various sources, examples include but are not limited to flue gas and exhaust gas from combustion. Before the CO₂ is captured the gas is preferably treated in filters and separators to remove for instance particulates, sulphur compounds and similar. Such filtration steps and separation steps before CO₂ removal are known in the art.

According to the claimed invention, the system further comprises
- a calciner (4) located at a geographical location (3) remote from the carbonator (1) and adapted to heat the CaCO₃ of the transportable CaCO₃ storage container (2) to a temperature where CO₂ is released to produce CaO and
- at least one CaO storage container (5) for receiving and storing the CaO produced in the calciner (4).

The CaCO₃ storage containers (2) and the CaO storage containers (5) are not necessarily different, in one embodiment the same type of containers are utilized for both purposes.

In one embodiment, the CaO is coated with particles comprising SiO₂, and wherein the particles comprising SiO₂ have a diameter in the range 1-100 nm. In one embodiment the CaO and CaCO₃ is coated with particles comprising SiO₂, and wherein the particles comprising SiO₂ have a diameter in the range 1-100 nm. In one embodiment hydrophobized SiO₂ is used. For irregular particles the diameter should be interpreted as the largest size in any dimension. During repeated use of the material CaO/CaCO₃ long term effects may occur including formation of crystals and other structural changes which impairs the reactivity of the material. The coating with particles comprising SiO₂ ameliorates this problem. Further the coating makes the material easier to transport and handle since it flows easier. The coating comprises a layer of SiO₂-particles on the surface of the particles of CaO/CaCO₃. The coating is permeable to CO₂. When the material in the particles change from CaO to CaCO₃ and vice versa there is typically a volume change, but the coating of particles is able to adapt to the new volume of the particles as the material in the core changes between CaO and CaCO₃. The particles of CaO/CaCO₃ are larger than the particles comprising SiO₂, in one embodiment 100-1000 times larger. Both the CaO and/or the CaCO₃ are provided in the form of particles. In one embodiment, the particles comprising CaO and/or CaCO₃ have a largest size in the range 1-1000 um. The largest size in the largest size measured in any dimension. For a sphere the largest size corresponds to the diameter.

In one embodiment, the calciner (4) has a capacity to produce CaO per hour, which is at least 4 times larger than the capacity of the carbonator (1) to consume CaO per hour, calculated by weight. In yet another embodiment the calciner (4) has a capacity to produce CaO per hour, which is at least 10 times larger than the capacity of the carbonator (1) to consume CaO per hour, calculated by weight. In one embodiment, there is a plurality of carbonators (1). This has the advantage that one calciner can serve several carbonators and that the carbonator can be adapted to the needed capacity at each location and that the capacity of the calciner can be optimally designed which is a large calciner.

According to the claimed invention, the carbonator (1) and calciner (4) are located at least 0.5 km apart. In another embodiment the carbonator (1) and calciner (4) are located at least 5 km apart. In another embodiment the carbonator (1) and calciner (4) are located at least 10 km apart.

In one embodiment wherein there are more carbonators (1) than calciners (4).

In one embodiment, the transportable CaCO₃ storage container (2) comprises lifting means (6) for lifting and moving the transportable CaCO₃ storage container (2). The lifting means (6) can be any known feature allowing the container to be lifted and/or moved. Examples of lifting means include but are not limited to a hook, a loop, a handle, a flange, and a groove.

In one embodiment the transportable CaCO₃ storage container (2) comprises CaCO₃ container input means (7) for connecting the transportable CaCO₃ storage container (2) to the carbonator (1) for supply of CaCO₃ from the carbonator (1) to the CaCO₃ storage container (2), preferably in the form of quick-release input connection means (7). A quick-release input connection can be released at short time and can be reused during many operation cycles. In one embodiment the CaCO₃ container input means (7) is an opening in the top of the CaCO₃ storage container (2).

In one embodiment the carbonator (1) comprises carbonator CaCO₃ output means (8) for connecting the carbonator (1) to the CaCO₃ container input means (7) of the transportable CaCO₃ storage container (2) for supply of CaCO₃ from the carbonator (1) to the CaCO3 storage container (2).

In one embodiment, the transportable CaCO₃ storage container (2) comprises CaCO₃ container output means (9) for connecting the transportable CaCO₃ storage container (2) to the calciner (4) for supply of CaCO₃ in the transportable CaCO₃ storage container (2) to the calciner (4).

In a second aspect, there is provided a method for storing energy and capturing CO₂ comprising the steps of:
a. connecting a transportable CaCO₃ storage container (2) to a carbonator (1) by connecting CaCO₃ container input means (7) of the CaCO₃ storage container (2) to carbonator CaCO₃ output means (8) of the carbonator (1),
b. providing CO₂ and CaO to the carbonator (1) to capture CO₂ and thereby producing CaCO₃ and
c. transferring the CaCO₃ to the transportable CaCO₃ storage container (2) via said carbonator CaCO₃ output means (8) and CaCO₃ container input means (7) .

The CO₂ provided in step b) is provided from any stream comprising CO₂, preferably from a stream comprising an increased concentration of CO₂ such as at least 10 wt%, preferably at least 15 wt% or higher. The CO₂ can originate form an industrial process generating CO₂ including for instance combustion of a carbon containing fuel.

The method further comprises the steps of:
d. transporting the transportable CaCO₃ storage container (2) to a remote geographical location (3), said transporting involving transporting the transportable CaCO₃ storage container (2) at least 0.5 km, said transporting further involving the CaCO₃ storage container being connected to, pulled along by or loaded into some kind of transportation device,
e. transferring the CaCO₃ of the transportable CaCO₃ storage container (2) to a calciner (4), and
f. supplying heat to the calciner (4) to produce CO₂ and CaO.

The method further comprises the steps of:
g. transferring the CaO produced in step f to a transportable CaO storage container (5),
h. transporting the CaO storage container (5) to a carbonator (1) for capturing CO₂ and thereby producing CaCO₃.

Thereby the loop is closed so that the material CaO/CaCO₃. can be recycled.

The method further comprises the step of storing the CO₂ produced in step f. The CO₂ can be stored in the bedrock including bedrock comprising lime. Over the years, most of the CO₂ will then mineralize and stay in the bedrock.

The embodiments of the system are also applicable to the method.

In one embodiment of the method step d involves transporting more than 1 km.

## Claims

1. A system for energy storage and CO₂ capture comprising:
- CaO,
- a carbonator (1) adapted to react CaO with CO₂ to produce CaCO₃,
- at least one CaCO₃ storage container (2) for receiving and storing the CaCO₃ produced in the carbonator (1),
**characterized in that** the CaCO₃ storage container (2) is configured to be transportable such that the CaCO₃ can be supplied to a geographical location (3) remote from the carbonator (1) for CO₂ release
the system further comprising
- a calciner (4) located at a geographical location (3) remote from the carbonator (1) and adapted to heat the CaCO₃ of the transportable CaCO₃ storage container (2) to a temperature where CO₂ is released to produce CaO,
- at least one CaO storage container (5) for receiving and storing the CaO produced in the calciner (4), and
- at least one storage for released CO₂,
wherein the carbonator (1) and calciner (4) are located at least 0.5 km apart, and
wherein the CaCO₃ storage container (2) and the CaO storage container (5) are configured to be transportable so that it can be connected to, pulled along by or loaded into some kind of transportation device.

2. The system according to claim 1, wherein the CaO is coated with particles comprising SiO₂, and wherein the particles comprising SiO₂ have a diameter in the range 1-100 nm.

3. The system according to any one of claims 1-2, wherein the CaO and CaCO₃ are coated with particles comprising SiO₂, and wherein the particles comprising SiO₂ have a diameter in the range 1-100 nm.

4. The system according to claim 1 and any other preceding claim, wherein the calciner (4) has a capacity to produce CaO per hour which is at least 4 times larger than the capacity of the carbonator (1) to consume CaO per hour, calculated by weight.

5. The system according to claim 1 and any other preceding claim, wherein the carbonator (1) and calciner (4) are located at least 1 km apart.

6. The system according to any one of claims 1-5, wherein there is a plurality of carbonators (1).

7. The system according to claim 1 and any other preceding claim, wherein there are more carbonators (1) than calciners (4).

8. The system according to any one of claims 1-7, wherein the transportable CaCO₃ storage container (2) comprises lifting means (6) for lifting and moving the transportable CaCO₃ storage container (2).

9. The system according to any one of claims 1-8, wherein the transportable CaCO₃ storage container (2) comprises CaCO₃ container input means (7) for connecting the transportable CaCO₃ storage container (2) to the carbonator (1) for supply of CaCO₃ from the carbonator (1) to the CaCO₃ storage container (2), preferably in the form of quick-release input connection means (7).

10. The system according to claim 9, wherein the carbonator (1) comprises carbonator CaCO₃ output means (8) for connecting the carbonator (1) to the CaCO₃ container input means (7) of the transportable CaCO₃ storage container (2) for supply of CaCO₃ from the carbonator (1) to the CaCO₃ storage container (2).

11. The system according to claims 1 and 10, wherein the transportable CaCO₃ storage container (2) comprises CaCO₃ container output means (9) for connecting the transportable CaCO₃ storage container (2) to the calciner (4) for supply of CaCO₃ in the transportable CaCO₃ storage container (2) to the calciner (4).

12. A method for storing energy and capturing CO₂ comprising the steps of:
a. connecting a transportable CaCO₃ storage container (2) to a carbonator (1) by connecting CaCO₃ container input means (7) of the CaCO₃ storage container (2) to carbonator CaCO₃ output means (8) of the carbonator (1),
b. providing CO₂ and CaO to the carbonator (1) to capture CO₂ and thereby producing CaCO₃ and
c. transferring the CaCO₃ to the transportable CaCO₃ storage container (2) via said carbonator CaCO₃ output means (8) and CaCO₃ container input means (7) .
d. transporting the transportable CaCO₃ storage container (2) to a remote geographical location (3), said transporting involving transporting the transportable CaCO₃ storage container (2) at least 0.5 km, said transporting further involving the CaCO₃ storage container being connected to, pulled along by or loaded into some kind of transportation device,
e. transferring the CaCO₃ of the transportable CaCO₃ storage container (2) to a calciner (4), and
f. supplying heat to the calciner (4) to produce CO₂ and CaO,
g. transferring the CaO produced in step f to a transportable CaO storage container (5),
h. transporting the CaO storage container (5) to a carbonator (1) for capturing CO₂ and thereby producing CaCO₃,
i. storing the CO₂ produced in step f.

13. The method according to claim 12, wherein the CaCO₃ is coated with particles comprising SiO₂, and wherein the particles comprising SiO₂ have a diameter in the range 1-100 nm.

14. The method according to any one of claims 12-13, wherein the CaO is coated with particles comprising SiO₂, and wherein the particles comprising SiO₂ have a diameter in the range 1-100 nm.

15. The method according to any one of claims 12-14, wherein step d involves transporting more than 1 km.

## Patentansprüche

1. Ein System zur Energiespeicherung und CO₂-Abscheidung umfassend:
- CaO,
- einen Karbonator (1), der dafür ausgelegt ist, CaO mit CO₂ zu reagieren, um CaCO₃ zu erzeugen,
- mindestens einen CaCO₃-Speicherbehälter (2) zum Aufnehmen und Speichern des in dem Karbonator (1) erzeugten CaCO₃,
**dadurch gekennzeichnet, dass** der CaCO₃-Speicherbehälter (2) eingerichtet ist, dass er transportiert werden kann, so dass das CaCO₃ zur CO₂-Freisetzung an einen geographischen Ort (3) geliefert werden kann, der von dem Karbonator (1) entfernt ist,
wobei das System ferner umfassend:
- einen Kalzinator (4), der sich an einem geographischen Ort (3), der von dem Karbonator (1) entfernt ist, befindet und dafür ausgelegt ist, das CaCO₃ des transportierbaren CaCO₃-Speicherbehälters (2) auf eine Temperatur zu erhitzen, bei der CO₂ freigesetzt wird, um CaO zu erzeugen,
- mindestens einen CaO-Speicherbehälter (5) zum Aufnehmen und Speichern des in dem Kalzinator (4) erzeugten CaO, und
- mindestens einen Speicher für freigesetztes CO₂,
wobei der Karbonator (1) und der Kalzinator (4) sich mindestens 0,5 km voneinander entfernt befinden, und
wobei der CaCO₃-Speicherbehälter (2) und der CaO-Speicherbehälter (5) eingerichtet sind, transportierbar zu sein, so dass sie mit einer Art von Transportvorrichtung verbunden werden können, von dieser gezogen oder in diese verladen werden können.

2. Das System nach Anspruch 1, wobei das CaO mit Partikeln beschichtet ist, die SiO₂ umfassen, und wobei die Partikel, die SiO₂ umfassen, einen Durchmesser im Bereich von 1-100 nm aufweisen.

3. Das System nach einem der Ansprüche 1-2, wobei das CaO und das CaCO₃ mit Partikeln beschichtet sind, die SiO₂ umfassen, und wobei die Partikel, die SiO₂ umfassen, einen Durchmesser im Bereich von 1-100 nm aufweisen.

4. Das System nach Anspruch 1 und einem anderen vorhergehenden Anspruch, wobei der Kalzinator (4) eine Kapazität aufweist, CaO pro Stunde zu erzeugen, die mindestens 4 mal größer ist als die Kapazität des Karbonators (1), CaO pro Stunde zu verbrauchen, berechnet pro Gewicht.

5. Das System nach Anspruch 1 und einem anderen vorhergehenden Anspruch, wobei sich der Karbonator (1) und der Kalzinator (4) mindestens 1 km voneinander entfernt befinden.

6. Das System nach einem der Ansprüche 1-5, wobei mehrere Karbonatoren (1) vorhanden sind.

7. Das System nach Anspruch 1 und einem anderen vorhergehenden Anspruch, wobei mehr Karbonatoren (1) als Kalzinatoren (4) vorhanden sind.

8. Das System nach einem der Ansprüche 1-7, wobei der transportierbare CaCO₃-Speicherbehälter (2) Hebemittel (6) zum Heben und Bewegen des transportierbaren CaCO₃-Speicherbehälters (2) umfasst.

9. Das System nach einem der Ansprüche 1-8, wobei der transportierbare CaCO₃-Speicherbehälter (2) CaCO₃-Behälter-Eingabemittel (7) umfasst, um den transportierbaren CaCO₃-Speicherbehälter (2) mit dem Karbonator (1) zu verbinden, um dem CaCO₃-Speicherbehälter (2) CaCO₃ von dem Karbonator (1) zuzuführen, vorzugsweise in Form von Schnellverschluss-Eingabeverbindungsmitteln (7).

10. Das System nach Anspruch 9, wobei der Karbonator (1) Karbonator-CaCO₃-Ausgabemittel (8) umfasst, um den Karbonator (1) mit den CaCO₃-Behälter-Eingabemitteln (7) des transportierbaren CaCO₃-Speicherbehälters (2) zu verbinden, um dem CaCO₃-Speicherbehälter (2) CaCO₃ aus dem Karbonator (1) zuzuführen.

11. Das System nach den Ansprüchen 1 und 10, wobei der transportierbare CaCO₃-Speicherbehälter (2) CaCO₃-Behälter-Ausgabemittel (9) umfasst, um den transportierbaren CaCO₃-Speicherbehälter (2) mit dem Kalzinator (4) zu verbinden, um dem Kalzinator (4) CaCO₃ in dem transportierbaren CaCO₃-Speicherbehälter (2) zuzuführen.

12. Ein Verfahren zum Speichern von Energie und Abscheiden von CO₂, das die folgenden Schritte umfasst:
a. Verbinden eines transportierbaren CaCO₃-Speicherbehälters (2) mit einem Karbonator (1) durch Verbinden von CaCO₃-Behälter-Eingabemitteln (7) des CaCO₃-Speicherbehälters (2) mit Karbonator-CaCO₃-Ausgabemitteln (8) des Karbonators (1),
b. Bereitstellen von CO₂ und CaO für den Karbonator (1), um CO₂ abzuscheiden und dadurch CaCO₃ zu erzeugen, und
c. Umladen des CaCO₃ zu dem transportierbaren CaCO₃-Speicherbehälter (2) über die Karbonator-CaCO₃-Ausgabemittel (8) und die CaCO₃-Behälter-Eingabemittel (7),
d. Transportieren des transportierbaren CaCO₃-Speicherbehälters (2) zu einem entfernten geographischen Ort (3), wobei das Transportieren das Transportieren des transportierbaren CaCO₃-Speicherbehälters (2) um mindestens 0,5 km beinhaltet, wobei das Transportieren ferner beinhaltet, dass der CaCO₃-Speicherbehälter mit einer Art von Transportvorrichtung verbunden wird, von dieser gezogen oder in diese verladen wird,
e. Umladen des CaCO₃ des transportierbaren CaCO₃-Speicherbehälters (2) zu einem Kalzinator (4), und
f. Zuführen von Hitze zu dem Kalzinator (4), um CO₂ und CaO zu erzeugen,
g. Umladen des in Schritt f erzeugten CaO in einen transportierbaren CaO-Speicherbehälter (5),
h. Transportieren des transportierbaren CaO-Speicherbehälters (5) zu einem Karbonator (1), um CO₂ abzuscheiden und dadurch CaCO₃ zu erzeugen,
i. Speichern des in Schritt f erzeugten CO₂.

13. Das Verfahren nach Anspruch 12, wobei das CaO₃ mit Partikeln beschichtet ist, die SiO₂ umfassen, und wobei die Partikel, die SiO₂ umfassen, einen Durchmesser im Bereich von 1-100 nm aufweisen.

14. Das Verfahren nach einem der Ansprüche 12-13, wobei das CaO mit Partikeln beschichtet ist, die SiO₂ umfassen, und wobei die Partikel, die SiO₂ umfassen, einen Durchmesser im Bereich von 1-100 nm aufweisen.

15. Das Verfahren nach einem der Ansprüche 12-14, wobei Schritt d das Transportieren von mehr als 1 km beinhaltet.

## Revendications

1. Système de stockage d'énergie et de capture de CO₂ comprenant :
- du CaO,
- un carbonateur (1) adapté pour faire réagir du CaO avec du CO₂ pour produire du CaCO₃,
- au moins un récipient de stockage de CaCO₃ (2) pour recevoir et stocker le CaCO₃ produit dans le carbonateur (1),
**caractérisé en ce que** le récipient de stockage de CaCO₃ (2) est configuré pour être transportable de sorte que le CaCO₃ puisse être acheminé jusqu'à un emplacement géographique (3) à distance du carbonateur (1) pour une libération de CO₂
le système comprenant en outre
- un four de calcination (4) situé à un emplacement géographique (3) à distance du carbonateur (1) et adapté pour chauffer le CaCO₃ du récipient de stockage de CaCO₃ (2) transportable jusqu'à une température où du CO₂ est libéré pour produire du CaO,
- au moins un récipient de stockage de CaO (5) pour recevoir et stocker le CaO produit dans le four de calcination (4), et
- au moins un stockage pour le CO₂ libéré,
dans lequel le carbonateur (1) et le four de calcination (4) sont situés au moins à 0,5 km l'un de l'autre, et
dans lequel le récipient de stockage de CaCO₃ (2) et le récipient de stockage de CaO (5) sont configurés pour être transportables de façon à ce qu'ils puissent être reliés à, tirés par ou chargés dans un quelconque dispositif de transport.

2. Système selon la revendication 1, dans lequel le CaO est revêtu de particules comprenant du SiO₂, et dans lequel les particules comprenant du SiO₂ ont un diamètre dans la plage de 1 à 100 nm.

3. Système selon l'une quelconque des revendications 1 et 2, dans lequel le CaO et le CaCO₃ sont revêtus de particules comprenant du SiO₂, et dans lequel les particules comprenant du SiO₂ ont un diamètre dans la plage de 1 à 100 nm.

4. Système selon la revendication 1 et une quelconque autre revendication précédente, dans lequel le four de calcination (4) a une capacité à produire du CaO par heure qui est au moins 4 fois plus grande que la capacité du carbonateur (1) à consommer du CaO par heure, calculées en poids.

5. Système selon la revendication 1 et une quelconque autre revendication précédente, dans lequel le carbonateur (1) et le four de calcination (4) sont situés au moins à 1 km l'un de l'autre.

6. Système selon l'une quelconque des revendications 1 à 5, dans lequel il y a une pluralité de carbonateurs (1).

7. Système selon la revendication 1 et une quelconque autre revendication précédente, dans lequel il y a plus de carbonateurs (1) que de fours de calcination (4).

8. Système selon l'une quelconque des revendications 1 à 7, dans lequel le récipient de stockage de CaCO₃ (2) transportable comprend des moyens de levage (6) pour lever et déplacer le récipient de stockage de CaCO₃ (2) transportable.

9. Système selon l'une quelconque des revendications 1 à 8, dans lequel le récipient de stockage de CaCO₃ (2) transportable comprend des moyens d'entrée de récipient de CaCO₃ (7) pour relier le récipient de stockage de CaCO₃ (2) transportable au carbonateur (1) pour un acheminement de CaCO₃ depuis le carbonateur (1) jusqu'au récipient de stockage de CaCO₃ (2), de préférence sous la forme de moyens (7) de liaison d'entrée à libération rapide.

10. Système selon la revendication 9, dans lequel le carbonateur (1) comprend des moyens de sortie de CaCO₃ de carbonateur (8) pour relier le carbonateur (1) aux moyens (7) d'entrée de récipient de CaCO₃ du récipient de stockage de CaCO₃ (2) transportable pour un acheminement de CaCO₃ depuis le carbonateur (1) jusqu'au récipient de stockage de CaCO₃ (2).

11. Système selon les revendications 1 et 10, dans lequel le récipient de stockage de CaCO₃ (2) transportable comprend des moyens de sortie de récipient de CaCO₃ (9) pour relier le récipient de stockage de CaCO₃ (2) transportable au four de calcination (4) pour un acheminement de CaCO₃ dans le récipient de stockage de CaCO₃ (2) transportable jusqu'au four de calcination (4).

12. Procédé de stockage d'énergie et de capture de CO₂ comprenant les étapes consistant à :
a. relier un récipient de stockage de CaCO₃ (2) transportable à un carbonateur (1) en reliant des moyens (7) d'entrée de récipient de CaCO₃ du récipient de stockage de CaCO₃ (2) à des moyens de sortie de CaCO₃ de carbonateur (8) du carbonateur (1),
b. fournir du CO₂ et du CaO au carbonateur (1) pour capturer du CO₂ et produire ainsi du CaCO₃ et
c. transférer le CaCO₃ au récipient de stockage de CaCO₃ (2) transportable via lesdits moyens de sortie de CaCO₃ de carbonateur (8) et moyens (7) d'entrée de récipient de CaCO₃.
d. transporter le récipient de stockage de CaCO₃ (2) transportable vers un emplacement géographique (3) à distance, ledit transport impliquant un transport du récipient de stockage de CaCO₃ (2) transportable sur au moins 0,5 km, ledit transport impliquant en outre le fait que le récipient de stockage de CaCO₃ soit relié à, tiré par ou chargé dans un quelconque dispositif de transport,
e. transférer le CaCO₃ du récipient de stockage de CaCO₃ (2) transportable à un four de calcination (4), et
f. acheminer de la chaleur jusqu'au four de calcination (4) pour produire du CO₂ et du CaO,
g. transférer le CaO produit à l'étape f à un récipient de stockage de CaO (5) transportable,
h. transporter le récipient de stockage de CaO (5) vers un carbonateur (1) pour capturer du CO₂ et produire ainsi du CaCO₃,
i. stocker le CO₂ produit à l'étape f.

13. Procédé selon la revendication 12, dans lequel le CaCO₃ est revêtu de particules comprenant du SiO₂, et dans lequel les particules comprenant du SiO₂ ont un diamètre dans la plage de 1 à 100 nm.

14. Procédé selon l'une quelconque des revendications 12 et 13, dans lequel le CaO est revêtu de particules comprenant du SiO₂, et dans lequel les particules comprenant du SiO₂ ont un diamètre dans la plage de 1 à 100 nm.

15. Procédé selon l'une quelconque des revendications 12 à 14, dans lequel l'étape d implique un transport sur plus de 1 km.
